# EUROPÄISCHE PATENTSCHRIFT

(11) **EP 4 058 685 B1**
(45) Veröffentlichungstag und Bekanntmachung des Hinweises auf die Patenterteilung: **03.01.2024**
(21) Anmeldenummer: 20807358.5
(22) Anmeldetag: 13.11.2020
(51) Int. Cl.: F16F 15/167

(54) **KURBELWELLENANORDNUNG MIT DREHSCHWINGUNGSDÄMPFER**
CRANKSHAFT ARRANGEMENT COMPRISING A TORSIONAL VIBRATION DAMPER
AGENCEMENT DE VILEBREQUIN COMPRENANT UN AMORTISSEUR DE VIBRATIONS DE TORSION

(30) Priorität: 15.11.2019 DE 102019130924
(43) Veröffentlichungstag der Anmeldung: 21.09.2022
(73) Patentinhaber: Hasse & Wrede GmbH, 12681 Berlin (DE)
(72) Erfinder: STEIDL, Michael, 10318 Berlin (DE); REINSPERGER, Norbert, 15366 Hoppegarten (DE)
(74) Vertreter: Specht, Peter
(86) Internationale Anmeldenummer: PCT/EP2020/082090
(87) Internationale Veröffentlichungsnummer: WO 2021/094557

(56) Entgegenhaltungen:
- DE-A1-102013 101 671
- JP-A- H0 814 332
- US-A- 5 191 811

## Beschreibung

Die Erfindung betrifft eine Kurbelwellenanordnung mit einem Drehschwingungsdämpfer nach dem Oberbegriff des Anspruchs 1. Die Erfindung bezieht sich auch auf ein Verfahren zum Dämpfen von Drehschwingungen einer Kurbelwelle eines Verbrennungsmotors.

Kurbelwellen einer Hubkolbenverbrennungsmaschine sind häufig mit zugehörigen Antriebssträngen (z.B. Getriebe, Generatoren usw.) über elastische Kupplungen (Elastomer-Kupplung) verbunden, welche die Antriebsstränge von den Drehungleichförmigkeiten des Hubkolbenmotors isolieren. Unter Drehungleichförmigkeiten einer Welle sind Drehzahlschwankungen der gesamten Welle zu verstehen.

Die Isolationsfrequenz, d.h. die Frequenz, oberhalb welcher keine Schwingungen mehr übertragen werden, ergibt sich hauptsächlich aus der Steifigkeit der Elastomer-Kupplung, wobei eine niedrige Steifigkeit zu einer niederen Isolationsfrequenz führt. Allerdings kann diese Steifigkeit nicht beliebig niedrig gewählt werden, da die Elastomer-Kupplung sonst das statische Moment nicht übertragen kann und der statische Verdrehwinkel so groß wird, dass die Spannungen im Elastomerwerkstoff die zulässige Grenze überschreiten. Es muss also ein Kompromiss zwischen Isolationsgrad und Haltbarkeit der Elastomer-Kupplung gefunden werden.

Es gibt zusätzlich weitere Möglichkeiten, um die Drehungleichförmigkeiten zu reduzieren, in dem beispielsweise ein so genannter Tuned-Mass-Damper oder ein drehzahladaptiver Tilger zur Anwendung kommt. Hierzu wird eine zusätzliche seismische Masse mit dem System verbunden und durch geeignete Wahl der Ankopplungsparameter der seismischen Masse Energie aus dem zu dämpfenden System in die Schwingung der seismischen Masse umgeleitet, wodurch ein Moment generiert wird, welches das Hauptsystem beruhigt. Als nachteilig werden dabei die Kosten des Systems mit der seismischen Masse angesehen.

Das Dokument WO 2017 / 158 131 A2 beschreibt eine Kurbelwellenanordnung mit Drehschwingungsdämpfer. Diese angegebene Kombination, die auch als so genannter Flywheel-Integrated Damper and Coupling (FIDC) bezeichnet wird, ermöglicht es, Drehschwingungen zu bedämpfen und den Antriebsstrang zu isolieren. Als nachteilig wird es dabei angesehen, dass die Isolation des Antriebsstrangs keine wesentlichen Vorteile gegenüber einem konventionellen Aufbau, bei dem die Kurbelwelle an einem vorderen Ende mit einem Dämpfer und an dem anderen Ende mit einer Kupplung versehen ist, liefert.

Für Schwingungsisolationen sind Komponenten mit so genannten negativen mechanischen Steifigkeiten vorgeschlagen worden. Die benötigte Komponente, welche eine solche negative mechanische Steifigkeit bildet, kann nur relativ komplex als Hardware realisiert werden. Systeme, die negative Steifigkeit aufweisen, tun dies üblicherweise nur in einem sehr begrenzten Arbeitsbereich. Beispiele sind z.B. Tellerfedern, die im 'Durchschlagpunkt' betrieben werden. Lösungen, die negative Steifigkeit über einen größeren Arbeitsbereich bzw. größeren transversalen Weg zeigen, sind aktive Elemente, bei denen das mechanische Verhalten über eine Regelung realisiert werden muss.

In dem Dokument WO 2019 / 185 196 A1 wird eine lineare Magnetfeder und Verwendung in Schwingungstilgern beschrieben: "Die lineare Magnetfeder kann man auch als "negative Feder" verwenden. Wie bei einer "positiven Feder" liegt in der Mittel- bzw. Ausgangslage keine Kraft (Moment) vor. Weicht der bewegte Teil von dieser Lage ab, entsteht keine rückstellende, sondern eine auslenkende Kraft (Moment), die linear mit der Auslenkung aus der Mittel-Ausgangslage ansteigt."

Das Dokument der Mitsubishi Electric Corporation - Public Relations Division Nr. 3251, veröffentlicht am 07.02.2019 (https://de.mitsubishielectric.com/de/news-events/releases/global/2019/0207-b/pdf/190207-b_3251_de_de.pdf) beschreibt eine passive Vorrichtung mit einer negativen Steifigkeit für die Regelung der Seilschwingungen bei Aufzügen in Hochhäusern. Eine negative Steifigkeit ist ein bekanntes Prinzip. Dabei wirkt eine Kraft in die entgegengesetzte Richtung gegen die Rückstellkraft einer normalen Feder. Die negative Steifigkeit wird durch Permanentmagnete erreicht, die einander zugewandt platziert werden, um das Seil dazwischen einzuklemmen.

Es seien noch weitere Beispiele zur Verwendung von negativen Steifigkeiten angegeben.

So illustriert das Dokument EP 3 521 656 A1 eine Schwingungsisolationsvorrichtung mit einer negativen Steifigkeit.

Das Dokument DE 10 2014 118 609 A1 beschreibt ein Verfahren und eine Vorrichtung zur aktiven Aufhängungsdämpfung mit einer negativen Steifigkeit.

Daher ist es die Aufgabe der Erfindung, eine Kurbelwellenanordnung mit einer verbesserten Isolation des Antriebsstrangs zu schaffen.

Die Aufgabe wird durch den Gegenstand des Anspruchs 1 gelöst.

Die Aufgabe wird auch durch ein Verfahren als Gegenstand des Anspruchs 15 gelöst.

Ein Erfindungsgedanke basiert auf der Erkenntnis, dass eine zusätzliche Kopplung der bei dem Flywheel-Integrated Damper and Coupling FIDC bereits vorhanden Komponenten dazu führt, dass die Isolation des Antriebsstrangs entscheidend verbessert werden kann. Diese zusätzliche Kopplung ist die Ankopplung des Schwungrings (der Tilgermasse) an die Sekundärseite der Kupplung. Entscheidend ist hierbei, dass diese zusätzliche Kopplung eine negative Steifigkeit aufweist, wodurch sich das gewünschte Verhalten einstellt.

Eine erfindungsgemäße Kurbelwellenanordnung für einen Verbrennungsmotor, umfasst a.) eine Kurbelwelle; b.) einen Drehschwingungsdämpfer mit einer Primärmasse und einem Schwungring; c.) wobei die Primärmasse fest mit der Kurbelwelle verbunden ist und der Schwungring und die Primärmasse über eine viskoses Fluid gekoppelt sind; d.) wobei der Drehschwingungsdämpfer an einem Abtriebsende der Kurbelwelle angebracht ist; e.) wobei die Primärmasse über einen Elastomer-Kupplungsring mit einer Sekundärkupplung gekoppelt ist. Der Drehschwingungsdämpfer ist mit der Sekundärkupplung über eine Rücckopplungseinrichtung gekoppelt.

In bevorzugter Ausführung weist die Rückkopplungseinrichtung eine negative Steifigkeit auf. Durch diese zusätzliche Kopplung mit der negativen Steifigkeit kann eine vorteilhaft wesentliche Verringerung von Drehschwingungen und Drehungleichförmigkeiten erreicht werden. So kann ein gewünschtes Verhalten mit der negativen Steifigkeit ausgebildet werden. Auch wenn sich mechanische Komponenten mit negativer Steifigkeit einzeln instabil verhalten, kann die Stabilität des Gesamtsystems durch die weiteren bereits vorhandenen Komponenten erreicht werden.

Hierbei ergibt sich der Vorteil, dass durch die Rückkopplungseinrichtung die Sekundärseite des Antriebsstrangs deutlich weniger Drehungleichförmigkeiten aufweisen kann als im Stand der Technik.

Ein weiterer Vorteil besteht darin, dass eine geringere Belastung der Komponenten des Antriebsstrangs erzielt werden kann, wie beispielsweise geringerer Getriebeverschleiß. Im Falle eines Generators kann die "Sauberkeit" einer Sinusschwingung des erzeugten Wechselstroms erhöht werden, d.h. eine Frequenzstabilität und Amplitudenstabilität kann verbessert werden.

Ein erfindungsgemäßes Verfahren zum Dämpfen von Drehschwingungen einer Kurbelwelle der oben angegebenen Kurbelwellenanordnung weist einen ersten Verfahrensschritt (S1) auf, in dem eine Vorrichtung bereitgestellt wird, welche einen Drehschwingungsdämpfer mit einer Primärkupplung mit einer Primärmasse und mit einem außenliegenden Schwungring und eine Sekundärkupplung mit einem Elastomer-Kupplungsring aufweist, wobei in einem zweiten Verfahrensschritt (S2) ein Drehschwingungsdämpfen mittels einer Kopplung des Schwungrings mit der Primärmasse erfolgt, wobei ein weiteres Dämpfen mittels einer Kopplung der Primärmasse ihrerseits mit der Sekundärkupplung ausgeführt wird. In einem dritten Verfahrensschritt (S3) wird ein Dämpfen der Drehschwingungen und gleichzeitig ein Isolieren eines Antriebsstrangs mittels einer negativen Steifigkeit, welche eine Rückkopplung der Sekundärkupplung auf den Schwungring bewirkt, durchgeführt.

Diese Art der Kopplung mittels einer negativen Steifigkeit ist im Gegensatz zu dem Stand der Technik besonders vorteilhaft, da somit eine verbesserte Reduktion von Drehungleichförmigkeiten und eine gleichzeitige sehr gute Isolation eines Antriebsstrangs einer Kurbelwelle im Gegensatz zum Stand der Technik erzielt werden können.

Vorteilhafte Weiterbildungen der Erfindung sind durch die Unteransprüche angegeben.

In einer weiteren Ausführung ist der Schwungring des Drehschwingungsdämpfers ein außenliegender Schwungring, mit welchem die Rückkopplungseinrichtung gekoppelt ist. Dies ist vorteilhaft, da so der Schwungring für die Rückkopplungseinrichtung von außen einfach zugänglich ist

In einer noch weiteren Ausführung weist die negative Steifigkeit Federelemente auf. Federn sind übliche Bauteile, die vorteilhaft mit hoher Qualität kostengünstig am Markt verfügbar sind.

Dabei werden die Federelemente der negativen Steifigkeit der Rückkopplungseinrichtung gleichmäßig am Umfang eines Außenrings der Sekundärkupplung und an einem gegenüberliegenden Rand des Schwungrings des Drehschwingungsdämpfers verteilt angebracht sind und erstrecken sich in radialer Richtung. Dies ergibt einen vorteilhaften einfachen und platzsparenden Aufbau.

Es ist vorteilhaft, wenn die Federelemente der negativen Steifigkeit der Rücckopplungseinrichtung jeweils mindestens eine vorgespannte Schraubenfeder aufweisen. Damit lässt sich jede Feder vorteilhaft einfach einstellen und anpassen.

In einer bevorzugten Ausführung weist die Rückkopplungseinrichtung mit der negativen Steifigkeit vier oder mehr Federelemente auf.

In einer alternativen Ausführung weist die negative Steifigkeit der Rückkopplungseinrichtung Magnetelemente auf. Dies ist vorteilhaft, da diese üblichen Bauteile mit hoher Qualität kostengünstig am Markt verfügbar sind.

So sind in einer weiteren Ausführung erste Magnetelemente gleichmäßig am Umfang eines Rands des Schwungrings verteilt angebracht, wobei zweite Magnetelemente gleichmäßig am Umfang eines Außenrings der Sekundärkupplung verteilt angebracht sind. Dieser Aufbau ist kompakt und platzsparend.

Die Rückkopplungseinrichtung mit der negativen Steifigkeit kann in einer bevorzugten Ausführung mindestens vier oder mehr erste Magnetelemente und mindestens vier oder mehr zweite Magnetelemente aufweisen. Der Vorteil hierbei ist die Anpassungsfähigkeit an unterschiedliche Einsatzfälle.

Eine noch weitere Ausführung sieht vor, dass ein Winkel zwischen jeweils zwei benachbarten ersten Magnetelementen und ein Winkel zwischen jeweils zwei benachbarten zweiten Magnetelementen um eine Drehachse 90° beträgt, wobei ein Winkel jeweils zwischen einem ersten Magnetelement und einem zweiten Magnetelement um die Drehachse einen Wert von 45° aufweist. Dieser Aufbau ist vorteilhaft einfach und kompakt.

In einer anderen Ausführung weisen die ersten Magnetelemente mit einem Nordpol zu der Drehachse, wobei die zweiten Magnetelemente mit einem Nordpol zu der Drehachse weisen. Dies ist vorteilhaft für die Einstellung der negativen Steifigkeit.

Es ist weiterhin vorteilhaft, dass die Magnetelemente Permanentmagnete sind, welche als übliche Bauteile kostengünstig in hoher Qualität verfügbar sind.

Wenn die Magnetelemente als Elektromagnete ausgebildet sind, können über eine entsprechende Steuervorrichtung die Werte der negativen Steifigkeit einstellbar, anpassbar und auch in Abhängigkeit von entsprechenden Parametern regelbar sein. Auf diese Weise kann ein positiver Feed-Back-Verstärker vorteilhaft realisiert werden.

Auch eine Kombination von Permanentmagneten und Elektromagneten kann in bestimmten Einsatzfällen vorteilhaft sein.

Eine weitere Kombination von Federelementen und Magnetelementen ist ebenfalls denkbar und erweitert vorteilhaft eine Anpassungsfähigkeit an unterschiedliche Einsatzfälle.

Ein Ausführungsbeispiel der Erfindung wird nachfolgend anhand der beigefügten Zeichnungen beschrieben.

Es zeigen:
- Figur 1: eine Kurbelwellenanordnung nach dem Stand der Technik;
- Figur 2: einen Abschnitt einer weiteren Kurbelwellenanordnung bzw. einer Vorrichtung zur Dämpfung von Drehschwingungen nach dem Stand der Technik;
- Figur 3: einen Abschnitt einer erfindungsgemäßen Kurbelwellenanordnung mit einem Ausführungsbeispiel der erfindungsgemäßen Vorrichtung zur Dämpfung von Drehschwingungen;
- Figur 4-5: schematische Ansichten von Ausführungsbeispielen einer Rückkopplungseinrichtung mit negativen Steifigkeiten;
- Figur 6-7: grafische Darstellungen von Drehschwingungskurven; und
- Figur 8: ein schematisches Flussdiagramm eines erfindungsgemäßen Verfahrens.

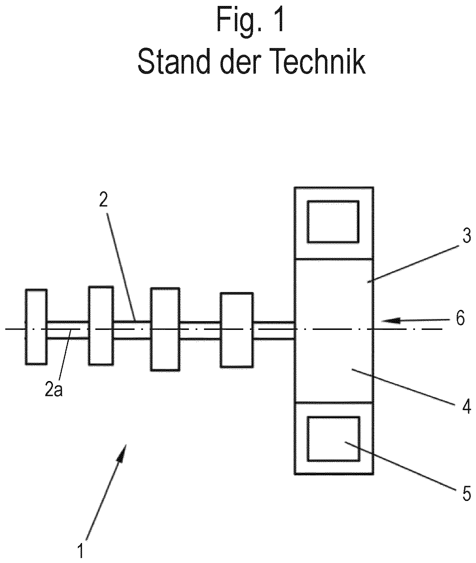

**Figur 1** zeigt eine Kurbelwellenanordnung nach dem Stand der Technik.

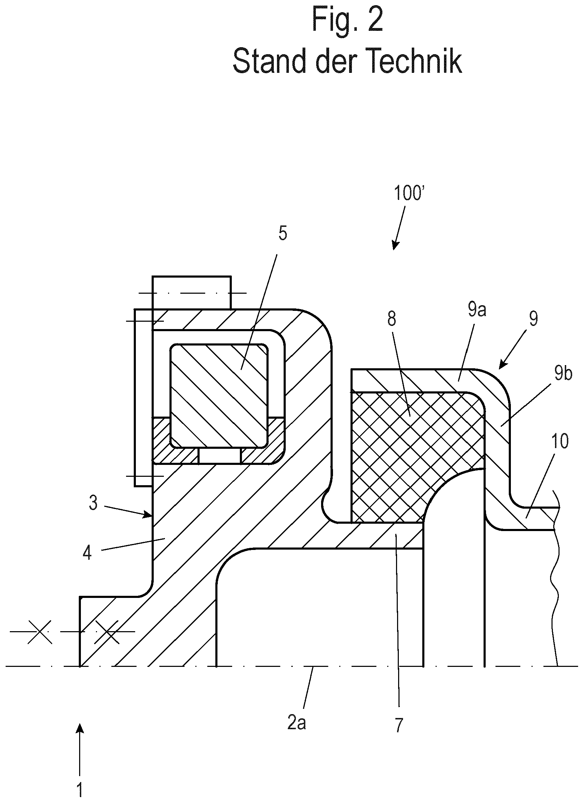

**Figur 2** stellt einen Abschnitt einer weiteren Kurbelwellenanordnung bzw. einer Vorrichtung 100' zur Dämpfung von Drehschwingungen nach dem Stand der Technik dar.

Die Kurbelwellenanordnung 1 ist besonders für einen Hubkolbenmotor, insbesondere für einen Verbrennungsmotor geeignet. Eine Kurbelwelle 2 mit einer Drehachse 2a ist an einem Antriebsende 6 mit einem Drehschwingungsdämpfer 3 verbunden. Damit befindet sich der Drehschwingungsdämpfer 3 auf einer ursprünglichen Position des nicht gezeigten Schwungrades.

Da der Drehschwingungsdämpfer 3 auch die Aufgabe der Reduzierung der Drehungleichförmigkeit des Motors, welchem die Kurbelwelle 2 zugeordnet ist, übernimmt, benötigt er eine geeignete Abstimmung zwischen einer Primärmasse 4, die fest mit der Kurbelwelle 2 verbunden ist, und einer Sekundärmasse 5, die seismisch, elastisch dämpfend an der Primärmasse 4 angebracht ist.

Die geeignete Abstimmung bewirkt, dass bei geringer Drehzahl, also bei geringen Frequenzen, die Verbindung zwischen der Primärmasse 4 und der Sekundärmasse 5 als starr betrachtet werden kann. Beide Massen 4, 5 bilden quasi eine Einheit und fungieren bei niedrigen Drehzahlen als Schwungrad. In dieser Situation spielen Drehschwingungen bei einem Motor eine untergeordnete Rolle. Ein weiteres Schwungrad ist bei einer solchen Kurbelwellenanordnung 1 nicht notwendig.

Bei höherer Drehzahl, also bei höheren Frequenzen kommt die größere Sekundärmasse 5 zur Geltung und dämpft die Drehschwingungen. Der Drehschwingungsdämpfer 3 arbeitet in seiner ursprünglichen Form. In diesem Betriebszustand, also bei hohen Drehzahlen, spielt die Drehungleichförmigkeit eine untergeordnete Rolle.

Die in dem Beispiel gezeigte Kurbelwellenanordnung 1 zeigt eine Prinzipskizze für einen Vier-Zylinder-Motor. Die Erfindung soll nicht darauf beschränkt sein, sie lässt sich auch einsetzen als Kurbelwellenanordnung von Motoren mit geringerer oder höherer Zylinderanzahl, insbesondere mit sechs, acht, zehn, zwölf oder mehr Zylindern oder auch V-Motoren mit bis zu 20 Zylindern.

Der Drehschwingungsdämpfer 3 in Figur 2 ist z.B. ein Viskositäts-Dämpfer und weist die Primärmasse 4 auf, die fest mit der Kurbelwelle verbunden ist, und die Sekundärmasse 5, die hier als Ring ausgebildet ist, der in einer Kammer der Primärmasse 4 rotieren kann, wobei ein Spalt zwischen diesen beiden Massen mit viskosem Medium, z.B. Silikonöl, gefüllt ist. Eine geeignete Abstimmung bewirkt auch hier, dass bei geringer Drehzahl, also bei geringen Frequenzen, die Primärmasse 4 und die Sekundärmasse 5 als eine Einheit betrachtet werden kann

In den Drehschwingungsdämpfer 3 ist auch noch direkt ein Kupplungs-Funktionsabschnitt mit einem Elastomer-Kupplungsring 8 integriert und bildet eine Sekundärkupplung 9. Der Elastomer-Kupplungsring 8 ist einerseits mit einem nabenartigen Innenring 7 der Primärmasse 4 und andererseits mit Außenring 8 der Sekundärkupplung 9 verbunden. Der Außenring 8 ist über einen Verbindungsabschnitt 9b mit einem Abtrieb 10, z.B. ein Eingangselement eines ansonsten nicht dargestellten Getriebes, das zu einem ebenfalls nicht gezeigten aber vorstellbaren Antriebsstrang gehört, gekoppelt.

Diese Ausführung wird auch als "Flywheel-Integrated Damper and Coupling" (FIDC) bezeichnet.

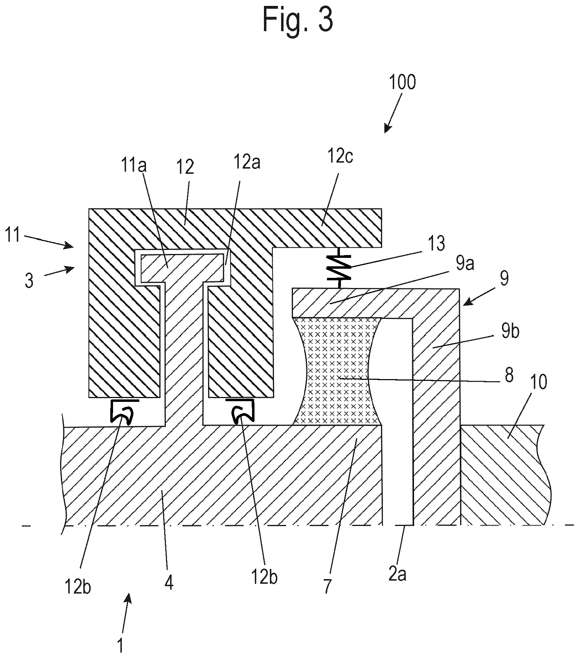

In **Figur 3** ist ein Abschnitt einer erfindungsgemäßen Kurbelwellenanordnung 1 mit einem Ausführungsbeispiel der erfindungsgemäßen Vorrichtung 100 zur Dämpfung von Drehschwingungen dargestellt.

Die Vorrichtung 100 umfasst eine Primärkupplung 11 als Viskositäts-Drehschwingungsdämpfer 3 mit einer Primärmasse 4 und einem Schwungring 12, eine Sekundärkupplung 9 mit einem Elastomer-Kupplungsring 8 und eine Rücckopplungseinrichtung 13.

Ein Schwungring 12 ist mit der Primärmasse 4 gekoppelt. Dies ist in Figur 3 beispielhaft als eine Primärkupplung 11 dargestellt.

Die Primärkupplung 11 umfasst die mit der Kurbelwelle 2 verbundene Primärmasse 4, welche ein hier scheibenförmiges Dämpferelement 11a mit einem umlaufenden Kragen, und den Schwungring 12 mit einer Kammer 12a, in welcher das Dämpferelement 11a mit einem nicht näher beschriebenen Fluid aufgenommen ist. Die Kammer 12a ist mittels nicht näher beschriebener Dichtungen 12b gegenüber der Welle der Primärmasse 4 abgedichtet. Dieser Aufbau weist eine bestimmte Steifigkeit und Dämpfung auf.

Im Gegensatz zu dem Schwungring 5 aus dem Stand der Technik wie in Figur 2 gezeigt ist der Schwungring 12 hier als ein außenliegender Schwungring 12 ausgebildet. Der Schwungring 12 weist zudem einen umlaufenden Rand 12c auf, welcher zum Abtrieb 10 weist. Der Rand 12c wird unten noch weitere beschrieben.

Die Primärmasse 4 ist ihrerseits zudem mit der Sekundärkupplung 9 gekoppelt. Diese Kopplung ist in Figur 3 beispielhaft durch den Elastomer-Kupplungsring 8 mit seinen Verbindungen einerseits mit dem nabenartigen Innenring 7 der Primärmasse 4 und andererseits mit dem Außenring 8 der Sekundärkupplung 9 dargestellt.

Im Gegensatz zum Stand der Technik ist der Schwungring 12 über eine Steifigkeit mit der Sekundärkupplung 9 gekoppelt. Diese Steifigkeit ist hier als eine so genannte negative Steifigkeit einer Rückkopplungseinrichtung 13 ausgebildet. Die Rückkopplungseinrichtung 13 verbindet den Rand 12c des Schwungrings 12 über mit dem Außenring 9a der Sekundärkupplung 9.

Die Rückkopplungseinrichtung 13 bildet eine zusätzliche Kopplung der beim FIDC (siehe Figur 2) bereits vorhandenen Komponenten und führt dazu, dass die Isolation des Antriebsstrangs entscheidend verbessert werden kann. Diese zusätzliche Kopplung ist die Ankopplung des Schwungrings 12 (der Tilgermasse) an die Sekundärseite der Sekundärkupplung 9, d.h. an den Außenring 9a. Entscheidend ist hierbei, dass diese zusätzliche Kopplung eine negative Steifigkeit haben muss, damit sich das gewünschte Verhalten einstellt. Mechanische Komponenten mit negativer Steifigkeit verhalten sich einzeln instabil, die Stabilität des Gesamtsystems wird durch die weiteren bereits vorhandenen Kopplungen erzielt.

Die Kopplung des Schwungrings 12 an die Sekundärkupplung 9 mittels negativer Steifigkeit kann über verschiedene technische Ansätze erfolgen, z.B. über entsprechend angeordnete Magnete oder über vorgespannte Federn oder über ein aktives System mit positivem Feed-Back-Verstärker.

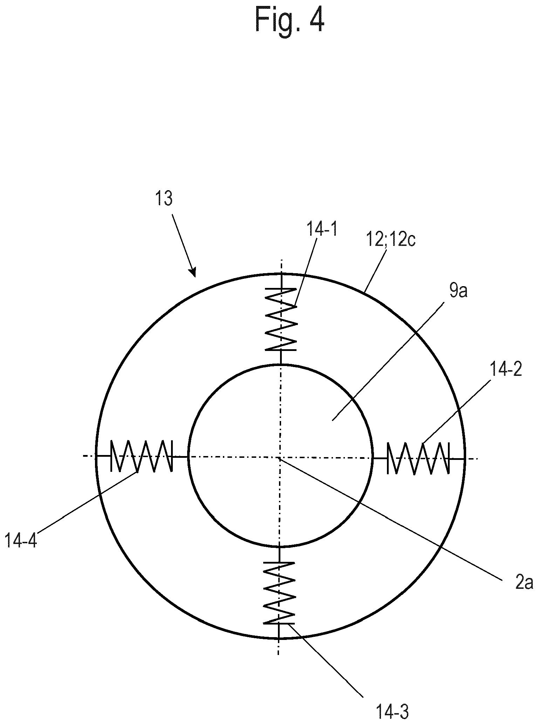

**Figur** 4 zeigt eine schematische Ansicht eines ersten Ausführungsbeispiels der Rückkopplungseinrichtung 13 mit negativer Steifigkeit mit Federelementen 14.

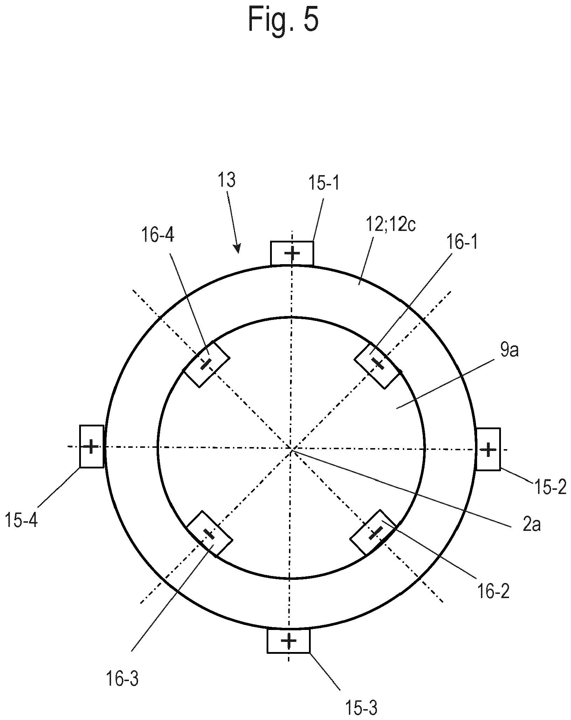

**Figur** 5 stellt eine schematische Ansicht eines zweiten Ausführungsbeispiels der Rückkopplungseinrichtung 13 mit negativer Steifigkeit mit Magnetelementen 15, 16 dar.

In diesem ersten Ausführungsbeispiel weist die Rückkopplungseinrichtung 13 vier Federelemente 14-1, 14-2, 14-3 und 14-4 auf, welche gleichmäßig am Umfang des Außenrings 9a der Sekundärkupplung 9 und am gegenüberliegenden Rand 12c des Schwungrings 12 verteilt angebracht sind und sich in radialer Richtung erstrecken. Ein Winkel zwischen jeweils zwei benachbarten Federelementen 14-1, 14-2, 14-3, 14-4 um die Drehachse 2a beträgt hier 90°.

Jedes Federelement 14-1, 14-2, 14-3, 14-4 besteht hier aus mindestens einer vorgespannten Schraubenfeder. Es können natürlich auch mehr als vier Federelemente 14 zum Einsatz kommen

In dem zweiten Ausführungsbeispiel der Rückkopplungseinrichtung 13 sind vier erste Magnetelemente 15-1, 15-2, 15-3, 15-4 gleichmäßig am Umfang des Rands 12c des Schwungrings 12 derart angebracht, dass ihr jeweiliger Nordpol, hier mit "+" bezeichnet zur Drehachse 2a weist. Ein Winkel zwischen jeweils zwei benachbarten ersten Magnetelementen 15-1, 15-2, 15-3, 15-4 um die Drehachse 2a beträgt hier 90°.

Zudem sind am Umfang des Außenrings 9a der Sekundärkupplung 9 vier zweite Magnetelemente 16-1, 16-2, 16-3, 16-4 gleichmäßig am Umfang des Außenrings 9a der Sekundärkupplung 9 angebracht. Ein Winkel zwischen jeweils zwei benachbarten zweiten Magnetelementen 16-1, 16-2, 16-3, 16-4 um die Drehachse 2a beträgt hier 90°, wobei ein Winkel jeweils zwischen einem ersten Magnetelement 15-1, 15-2, 15-3, 15-4 und einem zweiten Magnetelement 16-1, 16-2, 16-3, 16-4 um die Drehachse 2a einen Wert von 45° aufweist.

Die zweiten Magnetelementen 16-1, 16-2, 16-3, 16-4 sind so angeordnet, dass ihr Südpol, hier mit "-" bezeichnet, von der Drehachse 2a weg radial nach au-βen weist, bzw. ihr Nordpol zu der Drehachse 2a weist.

Die Magnetelemente 15-1, 15-2, 15-3, 15-4 und 16-1, 16-2, 16-3, 16-4 sind hier so angeordnet, dass der ringförmige Bereich zwischen dem Außenring 9a der Sekundärkupplung 9 und der Innenseite des Rands 12c, die zur Drehachse 2a weist, frei bleibt.

Die Magnetelemente 15-1, 15-2, 15-3, 15-4 und 16-1, 16-2, 16-3, 16-4 sind hier als Permanentmagnete ausgebildet. Es ist aber auch denkbar, dass sie als Elektromagnete ausgeführt sein können. In diesem Fall ist eine Steuerung der so gebildeten Rückkopplungseinrichtung 13 denkbar. Auch eine Regelung in Abhängigkeit von unterschiedlichen Parametern, z.B. Drehzahl, Motorlast usw., ist denkbar. Auf diese Weise könnte das oben angedeutete aktive System mit positivem Feedback-Verstärker realisiert werden.

Es können auch jeweils mehr als vier Magnetelemente 15, 16 verwendet werden.

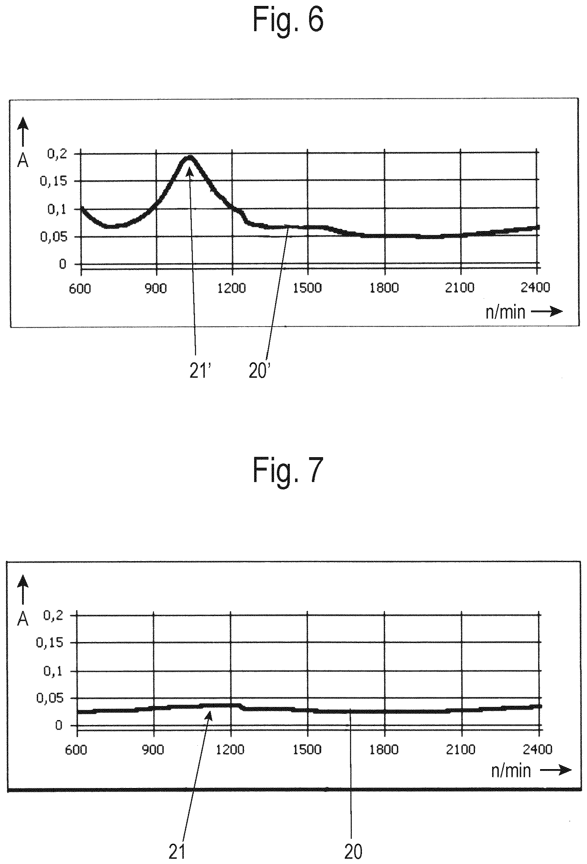

In **Figur 6** ist eine grafische Darstellung einer Drehschwingungskurve 20' mit einem Drehschwingungsdämpfer 3 der Vorrichtung 100' aus dem Stand der Technik gezeigt.

**Figur 7** zeigt eine grafische Darstellung einer Drehschwingungskurve 20 mit der erfindungsgemäße Vorrichtung 100.

Untersuchungen haben die Drehschwingungskurven 20', 20 in den Figuren 6 und 7 ergeben.

Die Drehschwingungskurve 20' ist mit ihrer Amplitude A über einer Drehzahl n aufgetragen. Bei einer Drehzahl n mit etwa 1050 1/min zeigt sich im Stand der Technik ein Amplitudenmaximum, das in etwa in der Mitte eines Bereiches 21' zwischen 900 und 1200 1/min bei einem Amplitudenwert von etwa A=0,2 liegt.

Mittels der erfindungsgemäßen Vorrichtung 100 kann eine Reduzierung von Drehungleichförmigkeiten um etwa 75% möglich sein. Dies wird durch die Drehschwingungskurve 20 in Figur 7 deutlich gezeigt. Die Amplitude A liegt im Bereich 21 wesentlich unter dem Amplitudenmaximum, das in Figur 6 im Bereich 21' auftritt. Zudem sind keine extremen Amplitudenmaxima mehr zu verzeichnen, die Amplitude A bleibt stetig unter einem Wert A=0,05 und verläuft ohne Überschreiten dieses Wertes.

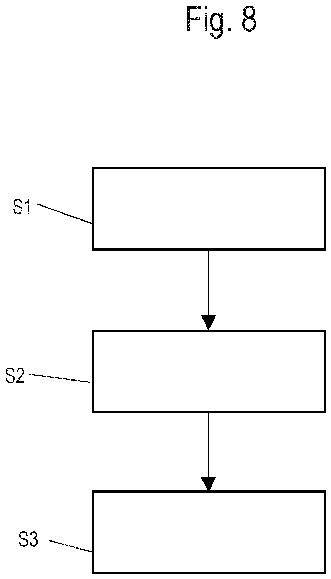

**Figur 8** zeigt ein schematisches Flussdiagramm eines erfindungsgemäßen Verfahrens zum Dämpfen von Drehschwingungen einer Kurbelwelle 2.

In einem ersten Verfahrensschritt S1 wird eine Vorrichtung 100 bereitgestellt, welche einen Drehschwingungsdämpfer 3 mit einer Primärkupplung 11 mit einer Primärmasse 4 und einem Schwungring 12 und eine Sekundärkupplung 9 mit einem Elastomer-Kupplungsring 8 aufweist.

Ein zweiter Verfahrensschritt S2 sieht vor, dass ein Drehschwingungsdämpfen mittels einer Kopplung des Schwungrings 12 mit der Primärmasse 4 erfolgt, wobei ein weiteres Dämpfen mittels einer Kopplung der Primärmasse 4 mit der Sekundärkupplung 9 ausgeführt wird.

Schließlich erfolgt in einem dritten Verfahrensschritt S3 ein Dämpfen der Drehschwingungen und gleichzeitiges Isolieren eines Antriebsstrangs mittels einer negativen Steifigkeit, welche eine Rückkopplung der Sekundärkupplung 9 auf den Schwungring 12 bewirkt.

Auf diese Weise können die Drehungleichförmigkeiten bzw. Drehschwingungen erheblich reduziert werden und es ergibt sich eine verbesserte Isolation des Antriebsstrangs. Zudem kann eine geringere Belastung der Komponenten des Antriebsstrangs erzielt werden, wie beispielsweise geringerer Getriebeverschleiß. Im Falle eines Generators kann die "Sauberkeit" einer Sinusschwingung des erzeugten Wechselstroms erhöht werden, d.h. eine Frequenzstabilität und Amplitudenstabilität kann verbessert werden.

Die Erfindung ist durch das oben angegebene Ausführungsbeispiel nicht eingeschränkt, sondern im Rahmen der Ansprüche modifizierbar.

Es ist denkbar, dass die Rückkopplungseinrichtung 13 eine Kombination aus Federelementen 14 und Magnetelementen 15, 16 aufweist.

Die Magnetelemente 15, 16 können auch als Permanentmagnete und Elektromagnete kombiniert sein.

### Bezugszeichenliste

- 1: Kurbelwellenanordnung
- 2: Kurbelwelle
- 2a: Drehachse
- 3: Drehschwingungsdämpfer
- 4: Primärmasse
- 5: Sekundärmasse
- 6: Antriebsende Kurbelwelle
- 7: Innenring
- 8: Elastomer-Kupplungsring
- 9: Sekundärkupplung
- 9a: Außenring
- 9b: Verbindungsabschnitt
- 10: Abtrieb
- 11: Primärkupplung
- 11a: Dämpferelement
- 12: Schwungring
- 12a: Kammer
- 12b: Dichtelement
- 12c: Rand
- 13: Rückkopplungseinrichtung
- 14-1; 14-2; 14-3; 14-4: Federelement
- 15-1; 15-2; 15-3; 15-4: Erstes Magnetelement
- 16-1; 16-2; 16-3; 16-4: Zweites Magnetelement
- 17, 18, 19: Kennlinie
- 20, 20': Drehschwingungskurve
- 21, 21': Bereich
- 100, 100': Vorrichtung
- A: Amplitude
- F: Kraft
- S1; S2; S3: Verfahrensschritt
- x: Weg

## Patentansprüche

1. Kurbelwellenanordnung (1) für einen Verbrennungsmotor, aufweisend
a. eine Kurbelwelle (2);
b. einen Drehschwingungsdämpfer (3) mit einer Primärmasse (4) und einem Schwungring (12);
c. wobei die Primärmasse (4) fest mit der Kurbelwelle (2) verbunden ist und der Schwungring (12) und die Primärmasse (4) über eine viskoses Fluid gekoppelt sind;
d. wobei der Drehschwingungsdämpfer (3) an einem Abtriebsende der Kurbelwelle (2) angebracht ist;
e. wobei die Primärmasse (4) über einen Elastomer-Kupplungsring (8) mit einer Sekundärkupplung (9) gekoppelt ist,
f. wobei der Drehschwingungsdämpfer (3) mit der Sekundärkupplung (9) über eine Rückkopplungseinrichtung (13) gekoppelt ist,
**dadurch gekennzeichnet, dass** die Rückkopplungseinrichtung (13) eine negative Steifigkeit aufweist.

2. Kurbelwellenanordnung (1) nach Anspruch 1, **dadurch gekennzeichnet, dass** der Schwungring (12) des Drehschwingungsdämpfers (3) ein außenliegender Schwungring (12) ist, mit welchem die Rückkopplungseinrichtung (13) gekoppelt ist.

3. Kurbelwellenanordnung (1) nach Anspruch 2, **dadurch gekennzeichnet, dass** die negative Steifigkeit Federelemente (14-1, 14-2, 14-3, 14-4) aufweist.

4. Kurbelwellenanordnung (1) nach Anspruch 3, **dadurch gekennzeichnet, dass** die Federelemente (14-1, 14-2, 14-3, 14-4) der negativen Steifigkeit (kₙ) der Rückkopplungseinrichtung (13) gleichmäßig am Umfang eines Außenrings (9a) der Sekundärkupplung (9) und an einem gegenüberliegenden Rand (12c) des Schwungrings (12) des Drehschwingungsdämpfers (3) verteilt angebracht sind und sich in radialer Richtung erstrecken.

5. Kurbelwellenanordnung (1) nach Anspruch 3 oder 4, **dadurch gekennzeichnet, dass** die Federelemente (14-1, 14-2, 14-3, 14-4) der negativen Steifigkeit der Rückkopplungseinrichtung (13) jeweils mindestens eine vorgespannte Schraubenfeder aufweisen.

6. Kurbelwellenanordnung (1) nach einem der Ansprüche 3 bis 5, **dadurch gekennzeichnet, dass** die Rückkopplungseinrichtung (13) mit der negativen Steifigkeit vier oder mehr Federelemente (14-1, 14-2, 14-3, 14-4) aufweist.

7. Kurbelwellenanordnung (1) nach einem der vorhergehenden Ansprüche, **dadurch gekennzeichnet, dass** die negative Steifigkeit der Rückkopplungseinrichtung (13) Magnetelemente (15-1, 15-2, 15-3, 15-4; 16-1, 16-2, 16-3, 16-4) aufweist.

8. Kurbelwellenanordnung (1) nach Anspruch 7, **dadurch gekennzeichnet, dass** erste Magnetelemente (15-1, 15-2, 15-3, 15-4) gleichmäßig am Umfang eines Rands (12c) des Schwungrings (12) verteilt angebracht sind, wobei zweite Magnetelemente (16-1, 16-2, 16-3, 16-4) gleichmäßig am Umfang eines Außenrings (9a) der Sekundärkupplung (9) verteilt angebracht sind.

9. Kurbelwellenanordnung (1) nach Anspruch 7 oder 8, **dadurch gekennzeichnet, dass** die Rückkopplungseinrichtung (13) mit der negativen Steifigkeit mindestens vier oder mehr erste Magnetelemente (15-1, 15-2, 15-3, 15-4) und mindestens vier oder mehr zweite Magnetelemente (16-1, 16-2, 16-3, 16-4) aufweist.

10. Kurbelwellenanordnung (1) nach Anspruch 9, **dadurch gekennzeichnet, dass** ein Winkel zwischen jeweils zwei benachbarten ersten Magnetelementen (15-1, 15-2, 15-3, 15-4) und ein Winkel zwischen jeweils zwei benachbarte zweiten Magnetelementen (16-1, 16-2, 16-3, 16-4) um eine Drehachse (2a) 90° beträgt, wobei ein Winkel jeweils zwischen einem ersten Magnetelement (15-1, 15-2, 15-3, 15-4) und einem zweiten Magnetelement (16-1, 16-2, 16-3, 16-4) um die Drehachse (2a) einen Wert von 45° aufweist.

11. Kurbelwellenanordnung (1) nach einem der Ansprüche 7 bis 10, **dadurch gekennzeichnet, dass** die ersten Magnetelemente (15-1, 15-2, 15-3, 15-4) mit einem Nordpol zu der Drehachse (2a) weisen, wobei die zweiten Magnetelemente (16-1, 16-2, 16-3, 16-4) mit einem Nordpol zu der Drehachse (2a) weisen.

12. Kurbelwellenanordnung (1) nach einem der Ansprüche 7 bis 11, **dadurch gekennzeichnet, dass** die Magnetelemente (15-1, 15-2, 15-3, 15-4; 16-1, 16-2, 16-3, 16-4) Permanentmagnete sind.

13. Kurbelwellenanordnung (1) nach einem der Ansprüche 7 bis 12, **dadurch gekennzeichnet, dass** die Magnetelemente (15-1, 15-2, 15-3, 15-4; 16-1, 16-2, 16-3, 16-4) als Elektromagnete ausgebildet sind.

14. Verfahren zum Dämpfen von Drehschwingungen einer Kurbelwelle (2) einer Kurbelwellenanordnung (1) nach einem der vorhergehenden Ansprüche, wobei
in einem ersten Verfahrensschritt (S1) eine Vorrichtung (100) bereitgestellt wird, welche einen Drehschwingungsdämpfer (3) mit einer Primärkupplung (11) mit einer Primärmasse (4) und mit einem außenliegenden Schwungring (12) und eine Sekundärkupplung (9) mit einem Elastomer-Kupplungsring (8) aufweist, wobei in einem zweiten Verfahrensschritt (S2) ein Drehschwingungsdämpfen mittels einer Kopplung des Schwungrings (12) mit der Primärmasse (4) erfolgt, wobei ein weiteres Dämpfen mittels einer Kopplung der Primärmasse (4) ihrerseits mit der Sekundärkupplung (9) ausgeführt wird,
**dadurch gekennzeichnet, dass**
in einem dritten Verfahrensschritt (S3) ein Dämpfen der Drehschwingungen und gleichzeitig ein Isolieren eines Antriebsstrangs mittels einer negativen Steifigkeit, welche eine Rückkopplung der Sekundärkupplung (9) auf den Schwungring (12) bewirkt, durchgeführt wird.

## Claims

1. Crankshaft arrangement (1) for an internal combustion engine, having
a. a crankshaft (2);
b. a torsional vibration damper (3) with a primary mass (4) and a vibration damper ring (12);
c. the primary mass (4) being connected fixedly to the crankshaft (2), and the vibration damper ring (12) and the primary mass (4) being coupled via a viscous fluid;
d. the torsional vibration damper (3) being attached to an output end of the crankshaft (2);
e. the primary mass (4) being coupled via an elastomer coupling ring (8) to a secondary coupling (9),
f. the torsional vibration damper (3) being coupled to the secondary coupling (9) via a feedback device (13),
**characterised in that** the feedback device (13) has a negative rigidity.

2. Crankshaft arrangement (1) according to claim 1, **characterised in that** the vibration damper ring (12) of the torsional vibration damper (3) is an outer vibration damper ring (12), to which the feedback device (13) is coupled.

3. Crankshaft arrangement (1) according to claim 2, **characterised in that** the negative rigidity has spring elements (14-1, 14-2, 14-3, 14-4).

4. Crankshaft arrangement (1) according to claim 3, **characterised in that** the spring elements (14-1, 14-2, 14-3, 14-4) of the negative rigidity (kₙ) of the feedback device (13) are attached in a manner which is distributed uniformly on the circumference of an outer ring (9a) of the secondary coupling (9) and on an opposite edge (12c) of the vibration damper ring (12) of the torsional vibration damper (3), and extend in the radial direction.

5. Crankshaft arrangement (1) according to claim 3 or 4, **characterised in that** the spring elements (14-1, 14-2, 14-3, 14-4) of the negative rigidity (kₙ) of the feedback device (13) in each case have at least one preloaded helical spring.

6. Crankshaft arrangement (1) according to any of claims 3 to 5,
**characterised in that** the feedback device (13) with the negative rigidity has four or more spring elements (14-1, 14-2, 14-3, 14-4).

7. Crankshaft arrangement (1) according to any of the preceding claims,
**characterised in that** the negative rigidity of the feedback device (13) has magnetic elements (15-1, 15-2, 15-3, 15-4; 16-1, 16-2, 16-3, 16-4).

8. Crankshaft arrangement (1) according to claim 7, **characterised in that** first magnetic elements (15-1, 15-2, 15-3, 15-4) are attached in a manner which is distributed uniformly on the circumference of an edge (12c) of the vibration damper ring (12), second magnetic elements (16-1, 16-2, 16-3, 16-4) being attached in a manner which is distributed uniformly on the circumference of an outer ring (9a) of the secondary coupling (9).

9. Crankshaft arrangement (1) according to claim 7 or 8, **characterised in that** the feedback device (13) with the negative rigidity has at least four or more first magnetic elements (15-1, 15-2, 15-3, 15-4) and at least four or more second magnetic elements (16-1, 16-2, 16-3, 16-4).

10. Crankshaft arrangement (1) according to claim 9, **characterised in that** an angle between in each case two adjacent first magnetic elements (15-1, 15-2, 15-3, 15-4) and an angle between in each case two adjacent second magnetic elements (16-1, 16-2, 16-3, 16-4) about a rotational axis (2a) is 90°, an angle in each case between a first magnetic element (15-1, 15-2, 15-3, 15-4) and a second magnetic element (16-1, 16-2, 16-3, 16-4) about the rotational axis (2a) having a value of 45°.

11. Crankshaft arrangement (1) according to any of claims 7 to 10,
**characterised in that** the first magnetic elements (15-1, 15-2, 15-3, 15-4) point with a north pole toward the rotational axis (2a), the second magnetic elements (16-1, 16-2, 16-3, 16-4) pointing with a north pole toward the rotational axis (2a).

12. Crankshaft arrangement (1) according to any of claims 7 to 11,
**characterised in that** the magnetic elements (15-1, 15-2, 15-3, 15-4; 16-1, 16-2, 16-3, 16-4) are permanent magnets.

13. Crankshaft arrangement (1) according to any of claims 7 to 12,
**characterised in that** the magnetic elements (15-1, 15-2, 15-3, 15-4; 16-1, 16-2, 16-3, 16-4) are configured as electromagnets.

14. Method for damping torsional vibrations of a crankshaft (2) of a crankshaft arrangement (1) according to any of the preceding claims,
in a first procedural step (S1), an apparatus (100) being provided which has a torsional vibration damper with a primary coupling (11) with a primary mass (4) and with an outer vibration damper ring (12) and a secondary coupling (9) with an elastomer coupling ring (8), torsional vibration damping taking place in a second procedural step (S2) by means of coupling of the vibration damper ring (12) to the primary mass (4), further damping being carried out by means of coupling of the primary mass (4) for its part to the secondary coupling (9),
**characterised in that**
in a third procedural step (S3), damping of the torsional vibrations and at the same time isolating of a drive train being carried out by means of a negative rigidity which brings about feedback of the secondary coupling (9) to the vibration damper ring (12).

## Revendications

1. Agencement (1) de vilebrequin d'un moteur à combustion, comportant
a. un vilebrequin (2) ;
b. un amortisseur (3) de vibrations de torsion ayant une masselotte (4) primaire et un anneau (12) oscillant ;
c. dans lequel la masselotte (4) primaire est reliée rigidement au vilebrequin (2) et l'anneau (12) oscillant et la masselotte (4) primaire sont accouplés par un fluide visqueux ;
d. dans lequel l'amortisseur (3) de vibrations de torsion est monté à une extrémité menée du vilebrequin (2) ;
e. dans lequel la masselotte (4) primaire est accouplée à un accouplement (9) secondaire par un anneau (8) d'accouplement en élastomère ;
f. dans lequel l'amortisseur (3) de vibrations de torsion est accouplé à l'accouplement (9) secondaire par un dispositif (13) de réaction,
**caractérisé en ce que** le dispositif (13) de réaction a une rigidité négative.

2. Agencement (1) de vilebrequin suivant la revendication 1, **caractérisé en ce que** l'anneau (12) oscillant de l'amortisseur (3) de vibrations de torsion est un anneau (12) oscillant se trouvant à l'extérieur, auquel le dispositif (13) de réaction est accouplé.

3. Agencement (1) de vilebrequin suivant la revendication 2, **caractérisé en ce que** la rigidité négative a des éléments (14-1, 14-2, 14-3, 14-4) de ressort.

4. Agencement (1) de vilebrequin suivant la revendication 3, **caractérisé en ce que** les éléments (14-1, 14-2, 14-3, 14-4) de ressort de la rigidité (kₙ) négative du dispositif (13) de réaction sont montés de manière répartie uniformément sur le pourtour d'un anneau (9a) extérieur de l'accouplement (9) secondaire et sur un bord (12c) opposé de l'anneau (12) oscillant de l'amortisseur (3) de vibrations de torsion et s'étendent dans la direction radiale.

5. Agencement (1) de vilebrequin suivant la revendication 3 ou 4, **caractérisé en ce que** les éléments (14-1, 14-2, 14-3, 14-4) de ressort de la rigidité négative du dispositif (13) de réaction ont chacun au moins un ressort hélicoïdal précontraint.

6. Agencement (1) de vilebrequin suivant l'une des revendications 3 à 5,
**caractérisé en ce que** le dispositif (13) de réaction ayant la rigidité négative a quatre éléments (14-1, 14-2, 14-3, 14-4) de ressort ou plus.

7. Agencement (1) de vilebrequin suivant l'une des revendications précédentes,
**caractérisé en ce que** la rigidité négative du dispositif (13) de réaction a des éléments (15-1, 15-2, 15-3, 15-4 ; 16-1, 16-2, 16-3, 16-4) d'aimant.

8. Agencement (1) de vilebrequin suivant la revendication 7, **caractérisé en ce que** les éléments (15-1, 15-2, 15-3, 15-4) d'aimant sont montés de manière répartie uniformément sur le pourtour d'un bord (12c) de l'anneau (12) oscillant, dans lequel deux éléments (16-1, 16-2, 16-3, 16-4) d'aimant sont montés d'une manière répartie uniformément sur le pourtour d'un anneau (9a) extérieur de l'accouplement (9) secondaire.

9. Agencement (1) de vilebrequin suivant la revendication 7 ou 8, **caractérisé en ce que** le dispositif (13) de réaction ayant la rigidité négative a au moins quatre ou plus premiers éléments (15-1, 15-2, 15-3, 15-4) d'aimant et au moins quatre ou plus deuxièmes éléments (16-1, 16-2, 16-3, 16-4) d'aimant.

10. Agencement (1) de vilebrequin suivant la revendication 9, **caractérisé en ce qu'**un angle entre respectivement deux premiers éléments (15-1, 15-2, 15-3, 15-4) d'aimant voisins et un angle entre respectivement deux deuxièmes éléments (16-1, 16-2, 16-3, 16-4) d'aimant voisins autour d'un axe (2a) de rotation s'élèvent à 90°, dans lequel un angle respectivement entre un premier élément (15-1, 15-2, 15-3, 15-4) d'aimant et un deuxième élément (16-1, 16-2, 16-3, 16-4) d'aimant autour de l'axe (2a) de rotation a une valeur de 45°.

11. Agencement (1) de vilebrequin suivant l'une des revendications 7 à 10,
**caractérisé en ce que** les premiers éléments (15-1, 15-2, 15-3, 15-4) d'aimant sont tournés par un pôle nord vers l'axe (2a) de rotation, dans lequel les deuxièmes éléments (16-1, 16-2, 16-3, 16-4) d'aimant sont tournés par un pôle nord vers l'axe (2a) de rotation.

12. Agencement (1) de vilebrequin suivant l'une des revendications 7 à 11,
**caractérisé en ce que** les éléments (15-1, 15-2, 15-3, 15-4 ; 16-1, 16-2, 16-3, 16-4) d'aimant sont des aimants permanents.

13. Agencement (1) de vilebrequin suivant l'une des revendications 7 à 12,
**caractérisé en ce que** les éléments (15-1, 15-2, 15-3, 15-4 ; 16-1, 16-2, 16-3, 16-4) d'aimant sont constitués sous la forme d'électroaimants.

14. Procédé d'amortissement de vibrations de torsion d'un vilebrequin (2) d'un agencement (1) de vilebrequin suivant l'une des revendications précédentes, dans lequel
dans un premier stade (S1) du procédé, on se procure un dispositif (100), qui a un amortisseur (3) de vibrations de torsion ayant un accouplement (11) primaire avec une masselotte (4) primaire et un anneau (12) oscillant se trouvant à l'extérieur et un accouplement (9) secondaire avec un anneau (8) d'accouplement en élastomère, dans lequel, dans un deuxième stade (S2) du procédé, un amortissement de vibrations de torsion a lieu au moyen de l'accouplement de l'anneau (12) oscillant à la masselotte (4) primaire, dans lequel on effectue un autre amortissement au moyen d'un accouplement de la masselotte (4) pour sa part avec l'accouplement (9) secondaire,
**caractérisé en ce que**
dans un troisième stade (S3) du procédé, on effectue un amortissement des vibrations de torsion et, en même temps, une isolation d'un chaîne cinématique au moyen d'une rigidité négative, qui provoque une réaction de l'accouplement (9) secondaire sur l'anneau (12) oscillant.
